(19)

Europäisches Patentamt
European Patent Office
Office européen des brevets

(11) **EP 3 593 893 A1**

(12) **EUROPEAN PATENT APPLICATION**

(43) Date of publication:
**15.01.2020 Bulletin 2020/03**

(51) Int Cl.:
**B01D 53/22** (2006.01)          **B01D 67/00** (2006.01)
**B01D 69/12** (2006.01)          **B01D 71/02** (2006.01)

(21) Application number: **18182624.9**

(22) Date of filing: **10.07.2018**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Ecole Polytechnique Federale De Lausanne (EPFL) EPFL-TTO 1015 Lausanne (CH)**

(72) Inventors:
• **AGRAWAL, Kumar Varoon**
  **1800 Vevey (CH)**
• **HE, Guangwei**
  **1950 Sion (CH)**

(74) Representative: **KATZAROV S.A.**
**European Patent Attorneys**
**12, Avenue des Morgines**
**1213 Petit-Lancy (CH)**

(54) **HYBRID MEMBRANES FOR ENERGY-EFFICIENT CARBON CAPTURE**

(57)    Gas separation membrane comprising a porous support onto which is deposited a nanoporous single-layer graphene film with a $CO_2$-philic polymer film having a thickness of 5-100 nm coated on top of graphene nanopores, acting as a $CO_2$-selective film, wherein the $CO_2$-philic polymer is swollen with another low molecular-weight $CO_2$-philic polymer.

**Figure 1**

EP 3 593 893 A1

**Description**

**Field of the invention**

The present invention pertains generally to the field of gas separation filters, especially useful to the $CO_2$ capture from the flue gas. More particularly, the present invention is related to filter membranes for $CO_2$ capture and even more particularly, the present invention relates to composite filter membranes for $CO_2$ capture.

**Background of the invention**

The global $CO_2$ emissions have risen rapidly in the last decade. $CO_2$ concentration in the atmosphere exceeded 410 ppm in early 2018. The short- to medium-term solutions to limit the increase of $CO_2$ concentration in the atmosphere include $CO_2$ capture, use and sequestration (CCUS). To reduce the energy-penalty of capture, which is currently prohibitively-high, the development of an energy-efficient carbon capture route is vital to control $CO_2$ emissions. Membrane-based $CO_2$ separation is one of most promising and energy-efficient solution because membranes do not rely on the expensive thermal energy. Membranes have been shown to be more energy-efficient than the commercial amine-based $CO_2$ scrubbing technology for the postcombustion carbon capture ($CO_2$ capture from the flue gas), especially from the power plants, petrochemical refineries, and steel and cement industries, where the $CO_2$ concentration in the flue gas is higher than 15%. The proposed performance target by the department of energy in the US is as follows: a $CO_2$ permeance (defined as pressure-normalized flux) higher than 1000 gas permeation units (GPU, where 1 GPU = 3.35 x $10^{-10}$ mole $m^{-2}$ $s^{-1}$ $Pa^{-1}$) and a $CO_2/N_2$ separation factor higher than 20.

Single-layer graphene is the thinnest molecular barrier, and is highly promising for the gas separation if molecular-sized pores can be incorporated with a high pore-density in the graphene lattice. Experiments and molecular simulations have indicated that nanoporous graphene film can yield orders of magnitude higher gas permeance than that from the conventional membranes, attributing to the ultrashort diffusion path of molecules through the atom-thick membrane. However, the incorporation of molecular-selective nanopores in otherwise impermeable graphene lattice, at a reasonably high pore-density, has proven to be a major challenge.

Recently, the inventors demonstrated an efficient molecular-sieving of $H_2$ from $CH_4$ using the single-layer graphene membrane by developing an ozone-based etching chemistry which allowed a control over pore-diameter in the range of 0.30-0.38 nm. Sieving $CO_2$ from $N_2$ is more challenging (the difference in kinetic diameters of $CO_2$ and $N_2$ is 0.03 nm, which is much smaller than that between the kinetic diameters of $H_2$ and $CH_4$, 0.09 nm). Until now, there are no report on single-layer-graphene based separation of gas mixture comprised of $CO_2$ and $N_2$. Multilayered film of graphene-oxide (GO) hosting $CO_2$-philic molecules into the interlayered nanochannels have demonstrated the separation of $CO_2$ from $N_2$. However, the gas transport pathway in GO membranes is long and tortuous, resulting in a moderate $CO_2$ permeance of 250 GPU, lower than the capture target. Moreover, the long-term stability of GO membrane is questionable.

In this regard, a primary object of the invention is to solve the above-mentioned problems and more particularly to develop a high-performance graphene-based membrane yielding performance that meets or exceeds the $CO_2$ capture target.

**Summary of the invention**

The present invention relates to a single-layer graphene film modified with a polymer film having a thickness of 5-100 nm, preferably 5-50 nm, more preferably 5-20 nm and even more preferably 10 nm, which yields a record performance in $CO_2/N_2$ separation, and which meets the $CO_2$ capture target.

In order to obtain this film, the lattice of single-layer graphene was etched to incorporate porosity. Then, a layer of CO2-philic polymer having a thickness of 5-100 nm, preferably 5-50 nm, more preferably 5-20 nm and even more preferably 10 nm, acting as a $CO_2$-selective film, was deposited on top of the graphene's nanopores. The CO2-philic polymer was subsequently swollen with another low molecular-weight CO2-philic polymer. The resulting membranes yielded a high $CO_2$ permeance of 6100 GPU and an attractive $CO_2/N_2$ separation factor of 22.5.

This invention also provides a novel graphene transfer method allowing the synthesis of crack-free graphene film on to a porous substrate.

In order to enhance clarity of the present specification, the following key abbreviations for membranes developed here are as follows:

| Abbreviation | Description |
| --- | --- |
| NG | Nanoporous single-layer graphene created using plasma |

(continued)

| Abbreviation | Description |
|---|---|
| ONG | NG after ozone functionalization |
| PONG | Polymer layer (PEI or PEGBG) coated on ONG |
| PONG1 | PONG prepared using PEI |
| PONG2 | PONG prepared using PEGBA |
| PONG@Si | PONG film transferred to Si substrate |
| PONG1@Si | PONG@Si prepared using PEI |
| PONG2@Si | PONG@Si prepared using PEGBA |
| SPONG/PTMSP | PONG coated with PTMSP and swollen with PEGDE |
| SPONG1/PTMSP | SPONG/PTMSP film where polymer layer is PEI |
| SPONG2/PTMSP | SPONG/PTMSP film where polymer layer is PEGBA |
| SPONG1_X | SPONG1/PTMSP membrane where plasma time for the NG was X s |
| SPONG2_X | SPONG2/PTMSP membrane where plasma time for the NG was X s |

**Brief description of the drawings**

Further particular advantages and features of the invention will become more apparent from the following non-limitative description of at least one embodiment of the invention which will refer to the accompanying drawings, wherein

- Figure 1 is a schematic diagram representing the manufacturing process of the membrane of the present invention;
- Figures 2A and 2B represent Raman spectra of as-synthesized graphene and graphene exposed to various plasma times, and a plot of $I_D/I_G$ and $I_{2D}/I_G$ ratios as a function of plasma exposure time, respectively;
- Figure 3 represent an XPS spectra of oxidized graphene by ozone treatment of 20 min at room temperature. The binding energies of C-C, C-O, C=O, O-C=O are 284.4, 285.7, 286.8, 288.5 eV, respectively;
- Figure 4 shows SEM images of the surface morphologies of a) ONG@Si, b) PONG1@Si, c) PONG2@Si, and d) SPONG1/PTMSP on Si wafer.
- Figure 5 shows SEM images of the cross-sectional morphologies of a) bare PTMSP, b) SPONG1/PTMSP, and c) SPONG2/PTMSP on Si wafer;
- Figure 6 shows a Thickness analysis of the PONG1 samples. a) Topography, and b) the corresponding height distribution of the as-prepared sample on the Si wafer. c) Topography of the trench, and d) the corresponding line profiles across the trench.;
- Figure 7 shows the gas separation performance of various membranes as a function of plasma time. The SPONG1 membranes under a) the single-gas permeation conditions, and b) the mixture-gas permeation conditions ($CO_2/N_2$ = 20/80 vol%). c) The SPONG2 membranes under the single-gas permeation conditions. Membranes were tested at 30 °C, and the pressure in the feed side was 2 bar.
- Figure 8 shows the $CO_2/N_2$ mixture separation performance of SPONG membranes compared with the state-of-the-art thin-film composite membranes. Facilitated transport membranes are not included because of their widely-known stability issues.

**Detailed description of the invention**

The present detailed description is intended to illustrate the invention in a non-limitative manner since any feature of an embodiment may be combined with any other feature of a different embodiment in an advantageous manner.
We will first detail an example of a membrane manufacturing process of the present invention.
First, a single-layer graphene was synthesized on a copper foil (25 $\mu$m, 99.8% purity, Sigma) using the low-pressure chemical vapor deposition (CVD). Briefly, the copper foil was annealed at 1000 °C in a $CO_2$ atmosphere for 30 min to get rid of organic contaminations. Subsequently, $CO_2$ flow was switched off and $H_2$ (8 mL/min) was introduced to anneal the copper. Then, $CH_4$ (24 mL/min) flow was open for 30 min as a precursor for graphene crystallization.
Then this graphene was used to prepare an oxygen-functionalized nanoporous single-layer graphene (ONG). The nanopores on the single-layer graphene were created by an $O_2$ plasma. A piece of the graphene/copper foil was placed in the plasma chamber in an $O_2$ atmosphere. After the pressure reaches 50 mTorr, the $O_2$ plasma was opened for a certain time (4-8 s) to etch the graphene lattice. The nanoporous graphene was oxygen-functionalized by placing graphene in an oxidizing atmosphere (21% $O_3$ in $O_2$) generated by an ozone generator (Absolute Ozone® Atlas 30), for 20 min at room temperature.

In the further step, the ONG was modified by CO2-philic polymer to create a PONG. More particularly, PONG was prepared by spin coating a dilute solution of CO2-philic polymer on top of ONG resting on the copper foil. Aqueous solution of polyethylenimine (PEI, 10 mg/ml) or poly(ethylene glycol) bis(amine) (PEGBA, 20 mg/ml) was used as the coating solution. The coating solution was added dropwise within 10 s while the graphene/copper substrate was spinning at 1000 rpm. Subsequently, the spin coating was carried out at 3000 rpm for 60 s.

Subsequently, we carried out a coating of PTMSP for graphene transfer (ONG/PTMSP or PONG/PTMSP). Here, a thin PTMSP layer was coated onto the top of ONG or PONG by spin coating. A thin layer of 1.25 wt% of PTMSP toluene solution was spread on the substrate, followed by spinning the substrate at 1000 rpm for 30 s, and then 2000 rpm for 20 s. The resulting film was dried in a closed dish for 12 h, and then dried in a vacuum oven for 12 h at room temperature.

The final step comprises a swelling of the composite film and transfer to a porous tungsten support (SPONG/PTMSP). Here., the copper foil acting as substrate to the ONG/PTMSP or the PONG/PTMSP film was removed by chemical etching by placing the films on a $FeCl_3$ (1 M in water) bath for 30 min. Then, the underside of the floating film was rinsed with 0.1 M HCl solution for 1 h, and then on DI water for 1 h to remove the residues. In the case of PONG/PTMSP film, the film was floated on a poly(ethylene glycol) dimethyl ether (PEGDE, average $M_n$ = 500) aqueous solution (2 mg/mL) for 24 h to swell the PEI and PEGBA films with PEGDE. Finally, the film (referred to as SPONG/PTMSP) was scooped up using a porous tungsten support. The remaining water on the surface of the film was carefully removed by a bloating paper, followed by drying in a vacuum oven for 12 h. In the case of ONG/PTMSP film, the film was directly scooped up using a porous tungsten support.

Once created, the SPONG membranes were characterized by several methods including Raman spectroscopy, X-ray photoelectron spectroscopy (XPS), Scanning electron microscope (SEM), Atomic force microscope (AFM) and Gas permeation measurement.

The Raman characterization was carried out on graphene/copper using a Renishaw micro-Raman spectroscope (457 nm, 2.33 eV, 50x objective). More than 10 spectra were obtained using the mapping method for every sample. The $I_D/I_G$ and $I_{2D}/I_G$ ratios were calculated by analyzing the Raman data using MATLAB. The background was subtracted from the Raman data for the calculation.

XPS was used to confirm the functionalization of graphene (ONG). The XPS analysis was performed using a Mg K$\alpha$ X-ray source (1253.6 eV) and a Phoibos 100 (SPECS) hemispherical electron analyzer with a multichanneltron detector.

SEM was used to observe the surface or cross-sectional morphologies of ONG, ONG/PTMSP, and SPONG/PTMSP films, using FEI Teneo SEM with an operating voltage of 1-5 kV and a working distance of 2.5-6 mm. For the cross-section imaging, the sample was coated with a 10-nm-thick iridium layer. No conductive coating was used for observing surface morphologies.

AFM was used to detect the surface topography and thickness of PEGBA or PEI layers. For this, we transferred the graphene to a silica wafer by the conventional poly(methyl methacrylate) or PMMA based wet-transfer technique. Post-transfer, PMMA was removed by acetone wash and a heat treatment at 400 $\underline{o}$C for 2 h in an $Ar/H_2$ atmosphere. Subsequently, the porosity and oxygen-functionalization in graphene were generated by the similar method as described above. This was followed by spin-coating of PEI or PEGBA (same conditions as used before). These films are referred to as PONG@Si.

The single-gas and mixture gas permeation measurements were carried out in a homemade permeation cell. All flow rates were controlled by the mass flow controllers (MFC). The pressure of the feed side was controlled by adjusting the backpressure regulator. The transmembrane pressure difference was maintained at 1 bar. Ar was used as the sweep gas, carrying the permeate gas to a calibrated mass spectrometer (MS, Hiden Analytical, HPR-20) for the real-time analysis of the permeate concentration. The feed and sweep gas lines, and the membrane cell were heated in a convection oven to precisely control the temperature. The permeate composition data was recorded and averaged after the steady-state condition was attained (typically 30 minutes after changing the conditions). The permeances, $J_i$, of the gas i were calculated by Equation 1

$$J_i = X_i/(A \cdot \Delta P_i) \qquad\qquad \text{Equation 1}$$

where $X_i$ is the molar flow rate of component i, A is the membrane area, and $\Delta P_i$ is the transmembrane pressure difference for component i. The separation selectivity $\alpha_{ij}$ of the two components (i and j, where i is the faster-permeating component) was calculated by Eq. 2

$$\alpha_{ij} = \left(C_i/C_j\right)_{permeate} / \left(C_i/C_j\right)_{feed}$$

Equation 2

where $C_i$ is the concentration of component $i$ in a given stream.

In order to summarize the example above, we can say that the composite graphene membrane is fabricated as follows.

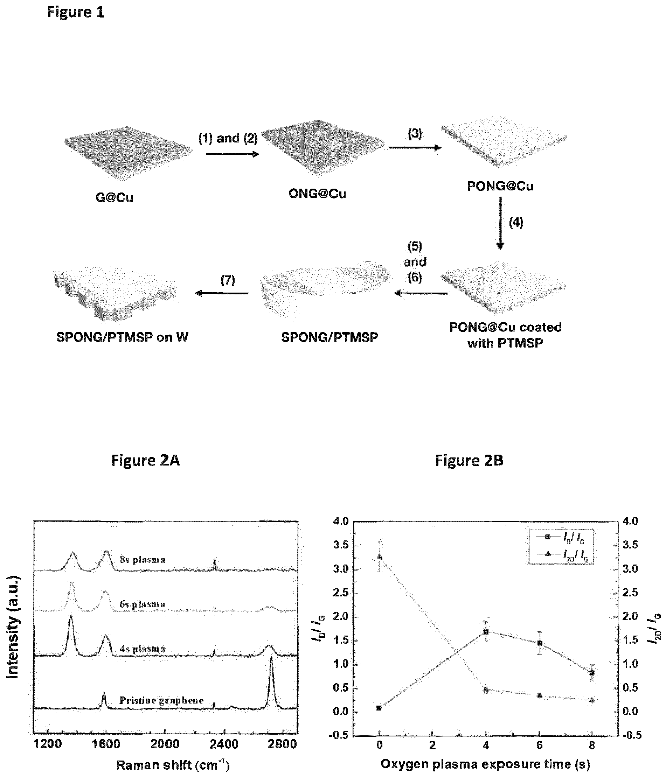

First, the basic step (step 0) consists in synthesizing monolayer graphene on a copper foil, preferably by CVD, then the following process is carried out as illustrated in Figure 1:

1) incorporating nanopores in the graphene lattice, preferably by the oxygen plasma treatment,
2) functionalizing the graphene surface, preferably by $O_3$ treatment,
3) coating graphene with a $CO_2$-philic polymer layer,
4) coating the resulting film in with PTMSP to improve the mechanical strength of the film allowing crack-free transfer,
5) removing Cu,
6) swelling the $CO_2$-philic polymer layer with PEGDE, and
7) transferring the resulting film onto a porous support.

The membranes prepared using PEI are referred to as SPONG1_X, where X represents plasma time in second. Accordingly, the membranes prepared using PEGBA are referred to as SPONG2-X.

Single-layer graphene can be synthesized on the copper foil preferably by the CVD method. Fig. 2A and 2B show the Raman spectroscopy data which displays that the as-synthesized graphene has an $I_D/I_G$ ratio of 0.08, and an $I_{2D}/I_G$ ratio of 3.26, confirming that the as-synthesized graphene comprised of a low-density of the intrinsic defects, and is primarily single-layer.

The $O_2$ plasma can be utilized as an effective method to incorporate nanopores in the graphene lattice. The evolution of pore-density with the plasma time is characterized by the Raman spectroscopy, as shown in Figure 2A and 2B. With 4s of plasma, the $I_D/I_G$ ratio, indicating the extent of disorder in graphene lattice, increases to 1.7, while the $I_{2D}/I_G$ ratio decreases to 0.48. With further increasing time of plasma treatment, both ratios decrease. This behavior indicates that the graphene treated with 4 s of plasma transitions from the "nanocrystalline graphite stage" into a "sp3-amorphous carbon stage", where $I_D$ is proportional to the probability of finding the sp2 carbon ring. According to the analysis of the $I_D/I_G$ ratio at 4 s, the distance between defects appears to be smaller than 5 nm, and the density of defects appears to be larger than $1.27 \times 10^{12}$ cm$^{-2}$. With increasing the plasma-etching time, the size and density of the defects increases. For graphene with 8 s of etching, the distance between defects is smaller than 3.5 nm, and the density of defects is larger than $2.6 \times 10^{12}$ cm$^{-2}$.

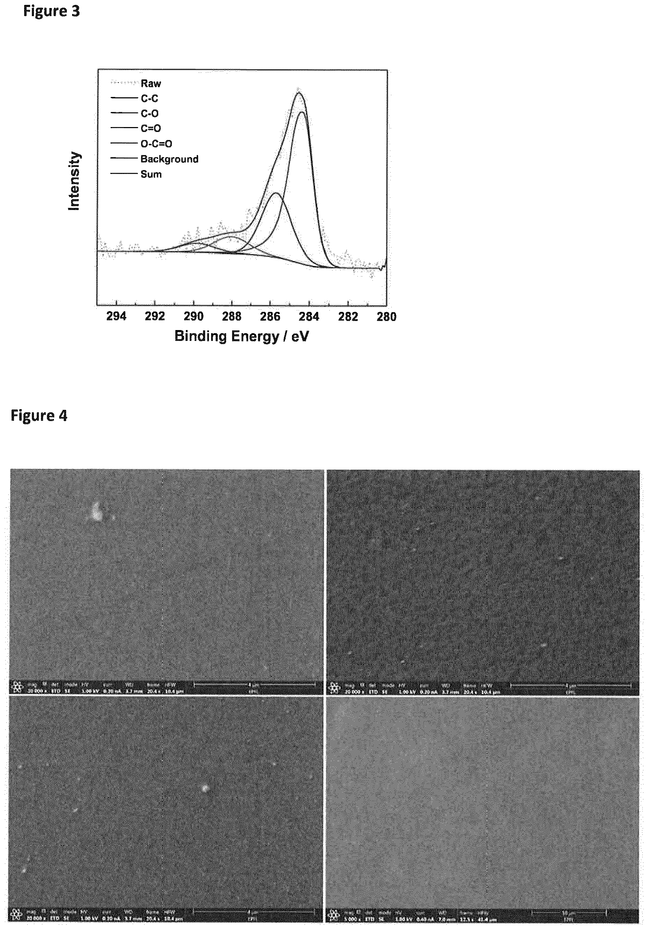

The nanoporous graphene is preferably further treated by ozone to functionalize it with abundant oxygen-containing groups, as indicated by the XPS data (Figure 3). According to peak area ratios, the concentration of C-C, C-O, C=O, O-C=O were 57.6, 28.6, 9.0, 4.8 wt%, respectively. Therefore, the percentage of carbon sites functionalized with an oxygen group was as quite high (42.4%). The oxygen-containing groups were mainly composed of epoxy, hydroxy, carbonyl, and carboxy groups.

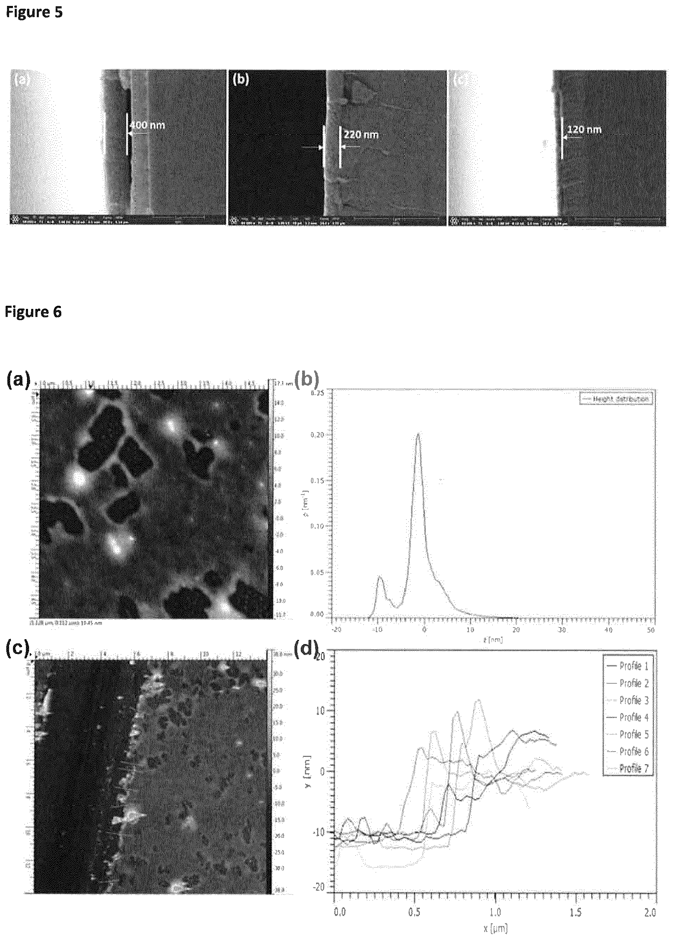

The functional groups, grafted on graphene as a result of the $O_3$ treatment, improve the interaction with the subsequent $CO_2$-philic polymer layer via hydrogen-bonding and electrostatic interactions. The surface and the cross-sectional morphologies of ONG and ONG coated with $CO_2$-philic polymer can be observed by SEM (Figure 4). Overall, the surfaces appear to be quite uniform and smooth indicating a uniform coating of the polymer layers on the graphene. The cross-sectional morphologies in Figure 5 show that the thicknesses of ONG/PTMSP, PONG1/PTMSP, and PONG2/PTMSP are 400, 220, and 120 nm, respectively. Surprisingly, the thickness of PONG1/PTMSP and PONG2/PTMSP are much smaller than that of ONG/PTMSP film. This can be attributed to the fact that coating of PEI or PEGBA films on graphene modifies the surface-wetting properties, leading to only a thinner PTMSP film when PTMSP is coated on top of PONG1 or PONG2, compared to when PTMSP is directly coated on ONG.

The coating of PTMSP on top of PONG facilitates the transfer of graphene from Cu to a porous substrate, without inducing any cracks or tear. A 100% success rate (defined by the number of successfully transferred samples normalized by the number of attempts) can be achieved. The PTMSP film was selected due to the following reasons:

(i) PTMSP is one of the most permeable polymers. The standalone PTMSP film on the porous support yields a $CO_2$ permeance of 9097 GPU with a $CO_2/N_2$ selectivity of 10.2. This high gas permeance ensures that the $CO_2$ permeance of composite film would not be limited by the PTMSP layer;

(ii) PTMSP was observed to be stable in the highly reactive etching solution, and did not develop cracks or pinholes; and

(iii) PTMSP provides sufficient mechanical support (rigidity) to the floating graphene film to eliminate cracks and tear in the film.

To confirm the thickness of the PEI and PEGBA films, the topography of the PONG samples is measured with or without scratches using the atomic force microscopy (AFM). The PONG samples for AFM were prepared by transferring ONG to a Si wafer, followed by coating PEI or PEGBA film on top of graphene. Figure 6a shows that the surface of PONG1 is relatively smooth. Several $\mu$m-scale uncovered areas were present attributing to the fact that the ONG does not cover the Si wafer completely due to cracks and tear, and as a result, the PEI coating solution does not wet the domains devoid of ONG. The height distribution data revealed a bimodal height distribution, with a modal spacing of about 8 nm (Figure 6b). Assuming that the bottom of the uncovered area to be Si wafer, the modal spacing indicates the thickness of the PEI layer to be around 8 nm. To further confirm the thickness, we created trenches in the PONG1 by gently scratching the sample's surface (Figure 6c, d), and measured the height profile. The step height across the trench was ca. 8-10 nm (Figure 6c, d), in good agreement with the result from the previous method.

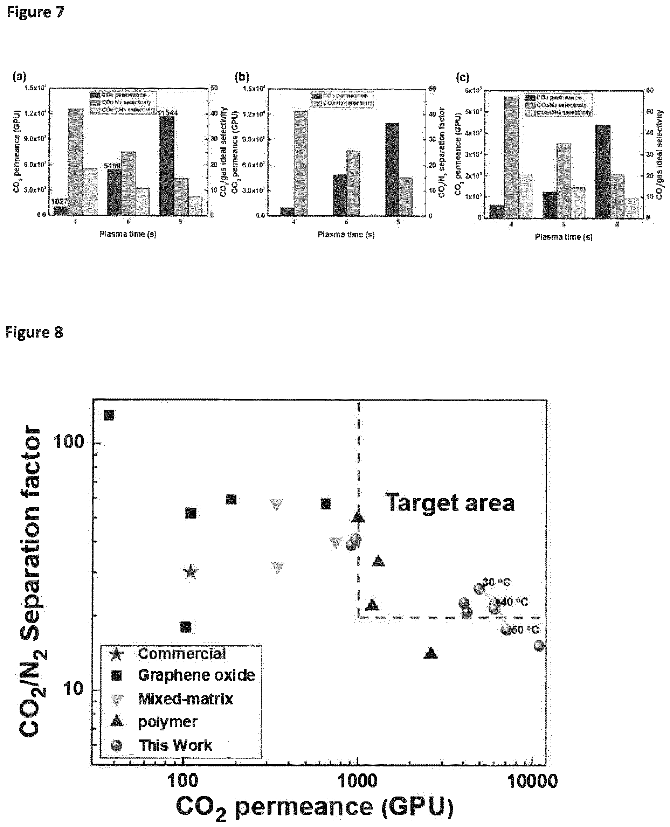

The gas separation performance is evaluated using a homemade gas permeance setup, and the data is shown in Tables 2, 3 and Figure 7. The gas separation performance from all SPONG1-X membranes shows a consistent trend; with increasing the time of $O_2$ plasma treatment from 4 to 8 s, the $CO_2$ permeance increases (from 1030 to 11640 GPU) while the $CO_2/N_2$ and $CO_2/CH_4$ selectivity decreases (41.9 to 14.7 and 18.6 to 7.5, respectively, Figure 7a). This indicates a strong role of graphene nanopores in the separation of $CO_2$ from $N_2$ and $CH_4$. In general, the pore-size-distribution (PSD) in plasma-treated graphene can be characterized by two kinds of pores; the pores across which the molecular transport is primarily in the temperature-activated mode and the pores across which the transport is primarily in the effusive mode. The former represents pores that are commensurate with the size of molecule that transverse the pores. For $CO_2$ transport, this corresponds to pores that have an electron-density-gap similar to or slightly smaller than the kinetic diameter of $CO_2$ (0.33 nm). The effusive transport takes place from the pores that are large enough such that molecule does not experience any activation barrier while translocating the pore. The permeation coefficient (permeance per pore) is higher in the effusive transport compared to that in the activated transport attributing to the activation barrier and the loss in entropy at the transition state in the case of activated transport. Therefore, a high degree of $CO_2/N_2$ separation can be achieved if pores with an electron-density-gap in the range of 0.33 to 0.36 nm can be incorporated in graphene (kinetic diameter of $N_2$ is 0.36 nm). Also, increasing the mean-pore-size is expected to increase permeance and reduce separation selectivity. Based on this, the observed decrease in $CO_2/N_2$ and $CO_2/CH_4$ selectivity with increasing plasma time strongly indicates that permeance increase and selectivity loss was primarily because of the increase in the mean-pore-size in graphene.

The carbon atoms at the pore-edge are oxygen-functionalized and highly polar attributing to a) their generation by the plasma treatment and b) subsequent graphene functionalization by ozone. These oxygenated polar groups strongly interact with the $CO_2$-philic polymer layers (PEI, PEGBA, and PEGDE) via electrostatic and van der Waal's interaction. Such strong interaction shrinks the effective electron-density-gap, especially for the large-pores that can accommodate the polymer chains. The polymer-modified pore yields higher $CO_2/N_2$ or $CO_2/CH_4$ selectivities compared to that from the unmodified pores. Therefore, when the pore size is increased significantly at the higher plasma time (8 s), the effectiveness of the polymer in shrinking the pore size is reduced. As a result, the SPONG1-8s membrane yields a $CO_2/N_2$ selectivity of 14.7, close to that from pure PTMSP membrane (10.2). This phenomenon indicates that the porous graphene film in the SPONG1-8s membrane contributed only slightly to the overall selectivity, attributing to that the pore size at 8 s plasma exposure is too big. In this case, it is very likely that larger pores are not fully covered with PEI film because of the relatively weaker interactions between the copper under the graphene pore and PEI.

Another important feature of the SPONG membrane is the ultrathin functional polymer film on top of the NPG. The PEGDE swollen PEI film contains a high-density $CO_2$-philic groups (amino and ethylene oxide), leading to the enhancement of $CO_2$ sorption and $CO_2$ separation capability. Especially, the linear PEG oligomer ($M_n$=500), brings a high-density of ethylene oxide groups, and has a very low crystallinity at room temperature, and thus affords a high intrinsic-free-volume and $CO_2$ solubility, as demonstrated by Shao and coworkers. The branched PEI polymer possesses a strong intramolecular hydrogen bonds, resulting in a low free volume and $CO_2$ permeability. The impregnation of PEGDE into the PEI network can break the intramolecular hydrogen bonds, increasing the free volume. As a result, the ultrathin PEGDE swollen PEI film has a high $CO_2$ permeance and good $CO_2/N_2$ separation capacity. For example, the SPONG1-6s (membrane M3) shows a remarkably high $CO_2$ permeance of 5470 GPU with a $CO_2/N_2$ ideal selectivity of 25.2.

The mixed gas permeation measurement can be performed using a feed mixture of 20/80 mol% for $CO_2/N_2$ at 30 °C and 2 bar (Table 1 and Figure 7b). Comparing the data from the single-gas and mixture gas, we see that the selectivity is nearly the same, while the gas permeance is decreased by around 7% for the mixture gas. For the SPONG1-4s membrane, the $CO_2$ permeance decreased from 1030 to 970 GPU while the selectivity decreased from 41.9 to 41.1 when we switched to the mixed gas feed.

Figure 7c shows the single-gas separation performance for the SPONG2 membranes. In comparing to SPONG1, these membranes yield a lower $CO_2$ gas permeance but a higher $CO_2/N_2$ ideal selectivity (Table 2). For example, the SPONG2-4s membrane yielded a $CO_2$ permeance of 620 GPU with a $CO_2/N_2$ ideal selectivity of 57.2.

Table 2. $CO_2$ permeance, $CO_2/N_2$ and $CO_2/CH_4$ ideal selectivity of SPONG membranes under single-gas permeation condition at 30 °C, 2 bar.

| Membrane type | Nomenclature | $CO_2$ permeance (GPU) | $CO_2/N_2$ ideal selectivity | $CO_2/CH_4$ ideal selectivity |
|---|---|---|---|---|
| SPONG1-4s | M1 | 1030 | 41.9 | 18.6 |
| SPONG1-4s | M2 | 1060 | 36.6 | 15.8 |
| SPONG1-6s | M3 | 5470 | 25.2 | 10.9 |
| SPONG1-6s | M4 | 6210 | 20.4 | 9.3 |
| SPONG1-6s | M5 | 4360 | 24.8 | 10.0 |
| SPONG1-6s | M6 | 3680 | 28.9 | 10.9 |
| SPONG1-8s | M7 | 11650 | 14.7 | 7.5 |
| ONG-8s | M8 | 3910 | 11.6 | 5.9 |
| SPONG2-4s | M9 | 620 | 57.2 | 20.5 |
| SPONG2-6s | M10 | 1240 | 35.1 | 14.4 |
| SPONG2-8s | M11 | 4370 | 20.8 | 9.3 |
| SPONG2-8s | M12 | 8280 | 17.1 | 8.6 |
| PTMSP | | 9100 | 3.4 | 10.2 |

Note: The ONG-8s membrane is prepared by transferring ONG prepared by 8 s plasma with PTMSP on a porous support.

Table 3. $CO_2$ permeance, $CO_2/N_2$ separation factor of SPONG membranes under mixture-gas permeation condition ($CO_2/N_2$ = 20/80 vol%) at 30 °C, 2 bar.

| Membrane type | Nomenclature | $CO_2$ permeance (GPU) | $CO_2/N_2$ separation factor |
|---|---|---|---|
| SPONG1-4s | M1 | 970 | 41.1 |
| SPONG1-4s | M2 | 910 | 38.8 |
| SPONG1-6s | M3 | 4940 | 25.8 |
| SPONG1-6s | M4 | 6040 | 21.4 |
| SPONG1-6s | M5 | 4030 | 22.6 |
| SPONG1-8s | M7 | 10940 | 15.2 |
| SPONG2-8s | M11 | 4200 | 20.8 |

Figure 8 shows the comparison of the SPONG membranes with the state-of-the-art membranes for the carbon capture (separation of the $CO_2/N_2$ mixture). The target area indicates that the desired membrane should have a high $CO_2$ permeance (>1000 GPU) and moderate separation factor (>20) to achieve an economical $CO_2$ capture from flue gas. The outstanding separation performance of the SPONG membranes is clearly established by the comparison in Figure 8. The SPONG1-6s membrane shows an exceptionally high $CO_2$ permeance of 4940 GPU with a moderate $CO_2/N_2$ separation factor of 25.8 at 30 °C. At 40 °C, the $CO_2$ permeance increased to 6100 GPU while the $CO_2/N_2$ separation factor, 22.5, remained in the target area. This $CO_2$ permeance is nearly 60 fold higher than that from the commercial cellulose acetate membrane, while their $CO_2/N_2$ separation factors are comparable.[6]

According to the techno-economic analysis model proposed by Merkel, a $CO_2/N_2$ selectivity dwelling between 20 and 30 is adequate for $CO_2$ capture. For selectivity beyond 30, the capture cost does not change significantly. However, at a fixed selectivity, enhancing the $CO_2$ permeance can remarkably decrease the capture cost by cutting down the membrane area. Thus, a moderate selectivity (20-30) in combination with the highest possible $CO_2$ permeance is highly attractive for the cost-effective $CO_2$ capture.

In summary, we report a hybrid single-layer graphene/polymer membrane, where a CO2-philic polymer layer having a thickness of 5-100 nm, preferably 5-50 nm, more preferably 5-20 nm and even more preferably 10 nm added on top of graphene nanopores provided an attractive separation selectivity. The membrane achieved an outstanding $CO_2$ capture performance, that is, $CO_2$ permeance is 6100 GPU with a $CO_2/N_2$ separation factor of 22.5, mainly attributing to two reasons: (i) the single layer graphene with a high density of nanopores combined with the ultrathin polymer can afford a high gas permeance due to the short diffusion pathway; and (ii) the $CO_2$-philic polymer can increase the solubility and adsorption of $CO_2$, thus affording a high selectivity of $CO_2/N_2$. The approach of hybrid membranes involving single-layer graphene with another $CO_2$-philic layer could pave the way for the large-scale commercialization of the membranes for carbon capture.

**Claims**

1. Gas separation membrane comprising a porous support onto which is deposited a nanoporous single-layer graphene film with a $CO_2$-philic polymer film having a thickness of 5-100 nm coated on top of graphene nanopores, acting as a $CO_2$-selective film, wherein the $CO_2$-philic polymer is swollen with another low molecular-weight $CO_2$-philic polymer.

2. Gas separation membrane according to claim 1, wherein the $CO_2$-philic polymer layer is polyethyleneimine or poly(ethylene glycol) bis(amine).

3. Gas separation membrane according to claim 1 or 2, wherein the low molecular-weight $CO_2$-philic polymer, acting as a swelling agent, is poly(ethylene glycol) dimethyl ether.

4. Gas separation membrane according to claims 1 to 3, wherein the porous support is a tungsten porous support.

5. Gas separation membrane according to claim 1 to 4, where the thickness of the CO2-philic polymer film is 5-50 nm.

6. Gas separation membrane according to claim 5, where the thickness of the CO2-philic polymer film is 5-20 nm.

7. Gas separation membrane according to claim 5 or 6, where the thickness of the CO2-philic polymer film is 10 nm.

8. Gas separation membrane according to claims 1 to 7, where the single-layer graphene film surface and the nanopores are modified by polymer chains.

9. Gas separation membrane manufacturing methods comprising of
   synthesizing monolayer graphene on a copper foil,
   incorporating nanopores in the graphene lattice,
   functionalizing the graphene surface with oxidative groups,
   coating graphene with a $CO_2$-philic polymer layer,
   coating the resulting film in with PTMSP to improve the mechanical strength of the film allowing crack-free transfer,
   removing Cu by chemical etching,
   swelling the $CO_2$-philic polymer layer with a low molecular-weight $CO_2$-philic polymer, and
   transferring the resulting film onto a porous support.

10. Gas separation membrane manufacturing according to claim 9, wherein the monolayer graphene synthesizing step is carried out by chemical vapor deposition.

11. Gas separation membrane manufacturing according to claim 9 or 10, wherein the nanopores incorporating step is carried out by the oxygen plasma treatment.

12. Gas separation membrane manufacturing according to claims 9 to 11, wherein the graphene surface functionalization step is carried out by the $O_3$ treatment.

13. Gas separation membrane manufacturing according to claims 9 to 12, wherein the $CO_2$-philic polymer layer is polyethyleneimine or poly(ethylene glycol) bis(amine).

14. Gas separation membrane manufacturing according to claims 9 to 13, wherein the Cu is removed by chemical etching.

15. Gas separation membrane manufacturing according to claims 9 to 14, wherein the low molecular-weight $CO_2$-philic polymer is poly(ethylene glycol) dimethyl ether.

16. Gas separation membrane manufacturing according to claims 9 to 15, wherein the porous support is a porous tungsten.

**17.** Gas separation membrane manufacturing according to claims 9 to 16, wherein the oxygen plasma treatment time is 1-8 seconds.

**Figure 1**

**Figure 2A**

**Figure 2B**

Figure 3

Figure 4

**Figure 5**

**Figure 6**

Figure 7

Figure 8

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2014/084861 A1 (EMPIRE TECHNOLOGY DEV LLC [US]) 5 June 2014 (2014-06-05) * claims 1-7 * ----- | 1-8 | INV. B01D53/22 B01D67/00 B01D69/12 |
| A | FANGLEI ZHOU ET AL: "Ultrathin graphene oxide-based hollow fiber membranes with brush-like CO2-philic agent for highly efficient CO2 capture", NATURE COMMUNICATIONS, vol. 8, no. 1, 1 December 2017 (2017-12-01), XP055544172, GB ISSN: 2041-1723, DOI: 10.1038/s41467-017-02318-1 * the whole document * ----- | 1-17 | B01D71/02 |
| A | XUEQIN LI ET AL: "Efficient CO 2 Capture by Functionalized Graphene Oxide Nanosheets as Fillers To Fabricate Multi-Permselective Mixed Matrix Membranes", ACS APPLIED MATERIALS & INTERFACES, vol. 7, no. 9, 11 March 2015 (2015-03-11), pages 5528-5537, XP055482916, US ISSN: 1944-8244, DOI: 10.1021/acsami.5b00106 * the whole document * ----- | 1-17 | |
| A | SHIQI HUANG ET AL: "Single-layer graphene membranes by crack-free transfer for gas mixture separation", NATURE COMMUNICATIONS, vol. 9, no. 1, 6 July 2018 (2018-07-06), XP055544190, GB ISSN: 2041-1723, DOI: 10.1038/s41467-018-04904-3 * the whole document * ----- | 1-17 | |

| | TECHNICAL FIELDS SEARCHED (IPC) |
|---|---|
| | B01D |

The present search report has been drawn up for all claims

| Place of search | Date of completion of the search | Examiner |
|---|---|---|
| Munich | 17 January 2019 | Kukolka, Florian |

EPO FORM 1503 03.82 (P04C01)

## ANNEX TO THE EUROPEAN SEARCH REPORT
## ON EUROPEAN PATENT APPLICATION NO.

EP 18 18 2624

This annex lists the patent family members relating to the patent documents cited in the above-mentioned European search report.
The members are as contained in the European Patent Office EDP file on
The European Patent Office is in no way liable for these particulars which are merely given for the purpose of information.

17-01-2019

| Patent document cited in search report | Publication date | Patent family member(s) | Publication date |
|---|---|---|---|
| WO 2014084861 A1 | 05-06-2014 | CN 104812470 A<br>US 2015273401 A1<br>WO 2014084861 A1 | 29-07-2015<br>01-10-2015<br>05-06-2014 |

EPO FORM P0459

For more details about this annex : see Official Journal of the European Patent Office, No. 12/82